# EUROPEAN PATENT APPLICATION

(11) **EP 4 595 754 A1**
(43) Date of publication of application: **06.08.2025**
(21) Application number: 23872585.7
(22) Date of filing: 29.09.2023
(51) Int. Cl.: A01N 43/72, A01G 7/06, A01N 25/00, A01N 43/16, A01N 43/40, A01N 63/22, A01P 13/00, A01P 21/00

(54) **COMPOSITION FOR REDUCING AMOUNT OF REACTIVE OXYGEN**

(30) Priority: 30.09.2022 JP 2022158110
(71) Applicant: Kaneka Corporation, Osaka-shi, Osaka 530-8288 (JP)
(72) Inventor: YAMANE Hiroaki, Iwata-shi, Shizuoka 438-0802 (JP); ASADA Takayuki, Iwata-shi, Shizuoka 438-0802 (JP); NOJIRI Masutoshi, Iwata-shi, Shizuoka 438-0802 (JP)
(74) Representative: Hoffmann Eitle
(86) International application number: PCT/JP2023/035580
(87) International publication number: WO 2024/071365

(57) **Abstract**

An objective of this disclosure is to provide a composition for reducing reactive oxygen that can suppress a decrease in photosynthetic capacity by ROS.

One of embodiments is a composition for reducing reactive oxygen comprising at least one biosurfactant selected from peptide-based biosurfactants and sugar-based biosurfactants, and an agriculturally acceptable carrier.

## Description

### Technical Field

The present disclosure relates to a composition for reducing reactive oxygen.

### Background Art

There have been known pharmaceutical compositions for providing plants with environmental stress resistance to grow plants efficiently (such as vegetables and fruit trees) (for example, see Patent Literature 1). Patent Literature 1 discloses a pharmaceutical composition containing a yeast cell wall enzymatic degradation product for providing plants with environmental stress resistance. Patent Literature 1 discloses that resistance against environmental stresses, such as temperature stress, salt stress, light stress, and water stress, can be improved by providing young seedlings and/or seedlings after planting in a field with the yeast cell wall enzymatic degradation product and that a surfactant can be combined. In the example, beer yeast is used.

Patent Literature 2 discloses a soil-treating composition for enhancing plant immune health, growth, and/or yields, which is a composition containing Wickerhamomyces anomalus yeast and/or its growth byproducts. It is disclosed that the soil-treating composition of Patent Literature 2 is a microbial-based soil-treating composition intended to enhance the health, growth, and total yield of a crop plant by enhancing the health and/or growth of the plant root system and by stimulating the plant natural immunity and other metabolic systems that contribute to the plant health and productivity. Since Wickerhamomyces anomalus yeast is a yeast-like fungus that produces ethyl acetate, it is known to cause a thinner smell when it adheres to food products and the like.

In addition, Patent Literature 3 discloses the use of at least one lipopeptide as a plant invigorator for plant growth. In the example of Patent Literature 3, the photosynthetic efficiency at the beginning and the end of water stress is evaluated by the Φ value (PSII), but no decrease in the photosynthetic efficiency is observed when the values are compared between the beginning and the end of water stress.

### Citation List

### Patent Literature

Patent Literature 1: JP 2007-45709 A
Patent Literature 2: JP 2022-509204 T
Patent Literature 3: JP 2020-504768 T

### Summary of Invention

### Technical Problem

It is known that when plants (such as vegetables and fruit trees) are exposed to abiotic stresses caused by high temperature, low temperature, salt, drying, and the like, the amount of CO₂ supplied from stomata decreases, the reducing capacity obtained from light energy cannot be fully consumed, reactive oxygen species (ROS) is generated, and photosynthetic capacity decreases by the ROS.

However, Patent Literatures 1 to 3 have not described or suggested a decrease in photosynthetic capacity by ROS, nor have they described or suggested a composition that could suppress the decrease in photosynthetic capacity by ROS.

That is, an objective of this disclosure is to provide a composition for reducing reactive oxygen that can suppress a decrease in photosynthetic capacity by ROS.

### Solution to Problem

Exemplary aspects of the embodiment are described below.
[1] A composition for reducing reactive oxygen comprising at least one biosurfactant selected from peptide-based biosurfactants and sugar-based biosurfactants, and an agriculturally acceptable carrier.
[2] The composition for reducing reactive oxygen according to [1] in which the biosurfactant is comprised in an amount of 0.004% by mass to 0.2% by mass in 100% by mass of the composition for reducing reactive oxygen.
[3] The composition for reducing reactive oxygen according to [1] or [2] further comprising a phospholipid.
[4] The composition for reducing reactive oxygen according to [3] in which the biosurfactant is comprised in an amount of 0.004% by mass to 0.2% by mass in 100% by mass of the composition for reducing reactive oxygen, and the phospholipid is comprised in an amount of 0.002% by mass to 0.1% by mass in 100% by mass of the composition for reducing reactive oxygen.
[5] The composition for reducing reactive oxygen according to any one of [1] to [4] further comprising a soybean meal degradation product.
[6] The composition for reducing reactive oxygen according to [5] in which the biosurfactant is comprised in an amount of 0.004% by mass to 0.2% by mass in 100% by mass of the composition for reducing reactive oxygen, and the soybean meal degradation product is comprised in an amount of 0.004% by mass to 1.0% by mass in 100% by mass of the composition for reducing reactive oxygen.
[7] The composition for reducing reactive oxygen according to any one of [1] to [6] in which the biosurfactant is at least one biosurfactant selected from surfactin, rhamnolipids, sophorolipids, and their salts.
[8] The composition for reducing reactive oxygen according to any one of [1] to [7] for spraying on a plant leaf.
[9] A composition precursor for reducing reactive oxygen to be the composition for reducing reactive oxygen according to any one of [1] to [8] by dilution.

This description encompasses content disclosed in Japanese Patent Application No. 2022-158110 forming the basis for priority of this application.

### Advantageous Effects of Invention

The composition for reducing reactive oxygen of this disclosure can sufficiently suppress the generation of ROS.

### Brief Description of Drawings

Fig. 1 shows ETR for Experimental Example 1.
Fig. 2 shows a SPAD value for Experimental Example 1.
Fig. 3 shows the ETR for Experimental Example 2.
Fig. 4 shows the SPAD value for Experimental Example 2.
Fig. 5 shows the ETR for Experimental Example 3.
Fig. 6 shows the SPAD value for Experimental Example 3.
Fig. 7 shows the ETR for Experimental Example 4.
Fig. 8 shows the SPAD value for Experimental Example 4.
Fig. 9 shows the ETR for Experimental Example 5.
Fig. 10 shows the SPAD value for Experimental Example 5.
Fig. 11 shows the ETR for Experimental Example 6.
Fig. 12 shows the SPAD value for Experimental Example 6.
Fig. 13 shows the ETR for Experimental Example 7.
Fig. 14 shows the SPAD value for Experimental Example 7.
Fig. 15 shows the ETR for Experimental Example 8.
Fig. 16 shows the SPAD value for Experimental Example 8.
Fig. 17 shows the ETR for Experimental Example 9.
Fig. 18 shows the SPAD value for Experimental Example 9.

### Description of Embodiments

The following describes the present invention in detail.

A composition for reducing reactive oxygen according to the embodiment comprises at least one biosurfactant selected from peptide-based biosurfactants and sugar-based biosurfactants, and an agriculturally acceptable carrier. The composition for reducing reactive oxygen of the embodiment can suppress not only the generation of reactive oxygen but also the generation of ROS. Therefore, the composition for reducing reactive oxygen can be rephrased as a composition for reducing ROS.

### <Biosurfactant>

The composition for reducing reactive oxygen comprises a biosurfactant. Examples of the biosurfactant include at least one biosurfactant selected from peptide-based biosurfactants and sugar-based biosurfactants. The composition for reducing reactive oxygen may comprise one biosurfactant alone or two or more biosurfactants. Since the composition for reducing reactive oxygen comprises a biosurfactant, providing plants with it can suppress the generation of ROS. While the reason for this is not clear, the effect was not observed even when a synthetic surfactant was used, and it was a biosurfactant-specific effect. As the biosurfactant, a biosurfactant not derived from Wickerhamomyces anomalus yeast is preferably used from the viewpoint of odor and food hygiene.

Examples of the peptide-based biosurfactant include a lipopeptide biosurfactant. The lipopeptide biosurfactant is one that has a hydrophobic group and a peptide containing a hydrophilic part, exhibits surfactant action, and is produced by microorganisms. Examples of the lipopeptide biosurfactant include, for example, surfactin, arthrofactin, iturin, fengycin, serrawettin, lichenysin, viscosin, and their salts.

As the peptide-based biosurfactant, at least one peptide-based biosurfactant selected from surfactin and its salt is preferred. The surfactin and surfactin salt can be expressed by the following general formula (1). As the surfactin and surfactin salt, one kind or two or more kinds may be used.

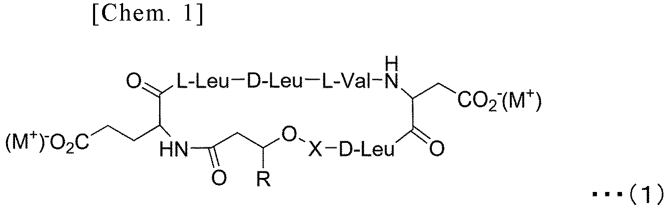

[In the formula (1), X denotes a residue of an amino acid selected from leucine, isoleucine, and valine, R denotes an alkyl group having 9 to 18 carbon atoms, and M⁺ each independently denotes a hydrogen ion (H⁺), alkali metal ion, ammonium ion, or pyridinium ion.]

Note that a case where M⁺ is a hydrogen ion means that CO₂⁻(M⁺) is a hydroxyl group (COOH group). A case where the two M⁺ are hydrogen ions means surfactin, and a case where at least one M⁺ is an alkali metal ion, ammonium ion, or pyridinium ion means surfactin salt. The general formula for surfactin is shown in the following general formula (1').

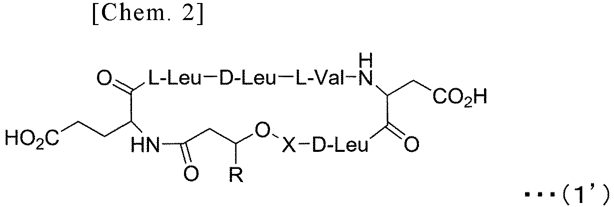

[In the formula (1'), X and R are synonymous with those in the formula (1).]

While X is a residue of an amino acid selected from leucine, isoleucine, and valine, it may be a residue of an amino acid in an L-form or a residue of an amino acid in a D-form, preferably a residue of an amino acid in the L-form.

R is an alkyl group having 9 to 18 carbon atoms, which is a linear or branched monovalent saturated hydrocarbon group having not less than 9 and not more than 18 carbon atoms. Examples of the alkyl group having 9 to 18 carbon atoms include, for example, an n-nonyl group, a 6-methyloctyl group, a 7-methyloctyl group, an n-decyl group, an 8-methylnonyl group, an n-undecyl group, a 9-methyldecyl group, an n-dodecyl group, a 10-methylundecyl group, an n-tridecyl group, an 11-methyldodecyl group, an n-tetradecyl group, an n-pentadecyl group, an n-hexadecyl group, an n-heptadecyl group, and an n-octadecyl group, and the 10-methylundecyl group is preferred.

M⁺ is each independently a hydrogen ion (H⁺), alkali metal ion, ammonium ion, or pyridinium ion. The alkali metal ion is not particularly limited and represents a lithium ion, sodium ion, potassium ion, or the like. Examples of the ammonium ion include, but are not particularly limited to, an ammonium ion expressed by, for example, N(R¹)₄⁺. R¹ each independently denotes a hydrogen or organic group. As one preferred aspect, the ammonium ion is a quaternary ammonium ion in which all R¹ are organic groups. Examples of the organic group include an alkyl group, an aralkyl group, and an aryl group. Specifically, examples of the alkyl group include an alkyl group having 1 to 10 carbon atoms, such as methyl, ethyl, n-propyl, isopropyl, n-butyl, and t-butyl. Examples of the aralkyl group include an aralkyl group having 7 to 12 carbon atoms, such as benzyl, methylbenzyl, and phenylethyl. Examples of the aryl group include an aryl group having 6 to 15 carbon atoms, such as phenyl, toluyl and xylyl. Examples of the ammonium ion include, for example, a tetramethylammonium ion and a tetraethylammonium ion. The pyridinium ion is not particularly limited. **In** the pyridinium ion, a hydrogen atom bonded to a carbon atom constituting the pyridine ring may be substituted with an organic group. **In** addition, in the pyridinium ion, it is only necessary that, for example, a hydrogen or organic group is bonded to N⁺ constituting the pyridine ring. Note that the organic groups listed in the explanation of R¹ can be appropriately used as the organic groups possessed by the pyridinium ion.

The two M⁺ present in the general formula (1) may be the same as or different from one another. As one preferred aspect of the two M⁺ present in the general formula (1), for example, some of M⁺ are hydrogen ions, and some of M⁺ are alkali metal ions. The alkali metal ion is not particularly limited and represents a lithium ion, sodium ion, potassium ion, or the like. When the two M⁺ present in the general formula (1) are of two or more kinds of ions, the two M⁺ may be the same kind of ions in a case where one molecule (salt) is focused on. When M⁺ are of two kinds of ions, the ratio (molar ratio) of one ion A to one ion B is, for example, 1: 10 to 10: 1, preferably 1:5 to 5:1, and more preferably 1:3 to 3:1. As one preferred aspect, some of the two M⁺ present in the general formula (1) is a hydrogen ion, and some of the two M⁺ is a sodium ion (Na⁺).

The peptide-based biosurfactant, such as surfactin or a surfactin salt, can be obtained by culturing a strain of a microorganism, for example, that belonging to hay bacillus (Bacillus subtilis), and isolating it from the culture fluid in accordance with a known method. As the peptide-based biosurfactant, a refined product may be used, or an unrefined product, for example, a culture fluid, can be directly used. **In** addition, as long as the molecular structure is the same, the one obtained by a chemical synthetic procedure can be used similarly. Further, a commercially available product can be used.

Examples of the sugar-based biosurfactant include rhamnolipids, sophorolipids, mannosylerythritol lipids, cellobiose lipids, trehalose lipids, succinoyl trehalose lipids, glucose lipids, polyol lipids, oligosaccharide fatty acid esters, and their salts.

As the sugar-based biosurfactant, at least one sugar-based biosurfactant selected from rhamnolipids, sophorolipids, and their salts is preferred.

The sugar-based biosurfactant can be obtained in accordance with a known method. Further, a commercially available product can be used.

Examples of a particularly preferred aspect of the biosurfactant include at least one biosurfactant selected from surfactin, rhamnolipids, sophorolipids, and their salts.

### <Phospholipid>

The composition for reducing reactive oxygen may comprise a phospholipid. When the composition for reducing reactive oxygen comprises a phospholipid, it is preferable because the ROS reduction effect can be exerted even when the concentration of the biosurfactant is low.

Examples of the phospholipid include, for example, lecithin. Lecithin is another name for phosphatidylcholine and can be roughly divided into natural lecithin and synthetic lecithin. Natural lecithin refers to naturally derived phospholipids that comprise phosphatidylcholine with a high content. For example, the one derived from egg yolk is referred to as "egg yolk lecithin," and the one derived from soybean is referred to as "soybean lecithin." On the other hand, as synthetic lecithin, dimyristoylphosphatidylcholine (DMPC), dipalmitoylphosphatidylcholine (DPPC), and the like are known. In this description, "lecithin" includes both natural lecithin and synthetic lecithin.

Examples of a phospholipid other than lecithin include glycerophospholipids, such as phosphatidic acids, bisphosphatidic acids, phosphatidylserine, phosphatidylethanolamine, phosphatidyl methylethanolamine, phosphatidylinositol, phosphatidylglycerol, and diphosphatidylglycerol; sphingophospholipids, such as sphingosine, ceramides, sphingomyelin, and cerebrosides; and hydrogenated lecithin, such as hydrogenated soybean phospholipids and hydrogenated egg yolk lecithin.

As the phospholipid, one or more phospholipids selected from phosphatidylcholine, hydrogenated lecithin, phosphatidic acids, bisphosphatidic acids, phosphatidylethanolamine, phosphatidyl methylethanolamine, phosphatidylserine, phosphatidylinositol, phosphatidylglycerol, diphosphatidylglycerol, and sphingomyelin are preferred.

### <Soybean Meal Degradation Product>

The composition for reducing reactive oxygen may comprise a soybean meal degradation product. When the composition for reducing reactive oxygen comprises a soybean meal degradation product, it is preferable because the ROS reduction effect can be exerted even when the concentration of the biosurfactant is low.

The soybean meal degradation product can be obtained by, for example, performing bacillus fermentation treatment on soybean meal using bacillus bacteria.

### <Agriculturally Acceptable Carrier>

The composition for reducing reactive oxygen comprises an agriculturally acceptable carrier. It is only necessary for the agriculturally acceptable carrier in this disclosure to be a carrier that can hold the biosurfactant described above, and it can be a liquid carrier or a solid carrier. Examples of the solid carrier include hydratable solid matters. The solid carrier can be in the form of powder or granules.

The agriculturally acceptable carrier is preferably a liquid carrier, such as water and an organic solvent. Here, the water as a carrier is not limited to pure water, but may be an aqueous solution, water-based suspension, water-based gel, or water-based slurry, and may have viscosity. Similarly, the organic solvent is not limited to a pure organic solvent, but may be an organic solvent-based solution, suspension, gel, or slurry, and may have viscosity. Examples of the organic solvent include methyl ether, ethyl ether, propyl ether, and butyl ether.

The agriculturally acceptable carrier is preferably a liquid carrier, such as water or an aqueous solution in which a hydratable substance is dissolved in water, or a solid carrier comprising a hydratable substance that can be dissolved in water. Examples of the hydratable substance include, for example, polyvinylpyrrolidone, alkylene oxide random and block copolymers, vinyl acetate/vinylpyrrolidone copolymers, alkylated vinylpyrrolidone copolymers, polyalkylene glycol including polypropylene glycol and polyethylene glycol, polyvinyl acetate, polyvinyl alcohol, gelatin, agar, gum arabic, karaya gum, tragacanth gum, guar gum, locust bean gum, xanthan gum, gum ghatti, carrageenan, alginate, casein, dextran, pectin, chitin, 2-hydroxyethyl starch, 2-aminoethyl starch, 2-hydroxyethyl cellulose, methyl cellulose, carboxymethylcellulose salt, cellulose sulfate, polyacrylamide, alkali metallic salt of maleic anhydride copolymer, and alkali metallic salt of poly(meth)acrylate.

### <Additive>

The composition for reducing reactive oxygen may comprise a component other than the biosurfactant, the phospholipid, the soybean meal degradation product, and the agriculturally acceptable carrier described above as an additive as necessary. The composition for reducing reactive oxygen may comprise one additive or two or more additives. Examples of the additive include, but are not limited to, humectants, colorants, anti-foam agents, UV protective agents, antifreezing agents, preservatives, biological regulators or biocides, emulsifiers, extending agents, capture agents, plasticizers, fluidizers, fusion aids, wax, and/or fillers (such as clay, talc, glass fiber, cellulose, and micronized wood).

### <Composition for Reducing Reactive Oxygen>

The composition for reducing reactive oxygen comprises at least one biosurfactant selected from peptide-based biosurfactants and sugar-based biosurfactants, and an agriculturally acceptable carrier, as described above.

**In** this disclosure, the phrase "not substantially comprise" a component means that when the amount of the biosurfactant comprised in the composition for reducing reactive oxygen is 100 parts by mass, the amount of the component is 0.01 parts by mass or less, preferably the amount of the component is 0.001 parts by mass or less.

The composition for reducing reactive oxygen comprises the biosurfactant in an amount of preferably 0.004% by mass to 0.2% by mass, more preferably 0.005% by mass to 0.1% by mass, in 100% by mass of the composition for reducing reactive oxygen. When the composition for reducing reactive oxygen does not substantially comprise a phospholipid or a soybean meal degradation product, the composition comprises the biosurfactant in an amount of preferably 0.01% by mass to 0.2% by mass, more preferably 0.02% by mass to 0.1% by mass, in 100% by mass of the composition for reducing reactive oxygen. The above ranges are preferable because the generation of ROS can be suppressed within the ranges particularly appropriately.

As one preferred aspect, the composition for reducing reactive oxygen comprises the biosurfactant and a phospholipid. When the composition for reducing reactive oxygen comprises the biosurfactant and a phospholipid, preferably, the biosurfactant is comprised in an amount of 0.004% by mass to 0.2% by mass in 100% by mass of the composition for reducing reactive oxygen, and the phospholipid is comprised in an amount of 0.002% by mass to 0.1% by mass in 100% by mass of the composition for reducing reactive oxygen. More preferably, the biosurfactant is comprised in an amount of 0.005% by mass to 0.1% by mass in 100% by mass of the composition for reducing reactive oxygen, and the phospholipid is comprised in an amount of 0.0025% by mass to 0.05% by mass in 100% by mass of the composition for reducing reactive oxygen. **In** addition, when the composition for reducing reactive oxygen comprises the biosurfactant and a phospholipid, the composition preferably does not substantially comprise a soybean meal degradation product. The above ranges are preferable because the generation of ROS can be suppressed within the ranges particularly appropriately.

As one preferred aspect, the composition for reducing reactive oxygen comprises the biosurfactant and a soybean meal degradation product. When the composition for reducing reactive oxygen comprises the biosurfactant and a soybean meal degradation product, the biosurfactant is comprised in an amount of preferably 0.004% by mass to 0.2% by mass, more preferably 0.005% by mass to 0.1% by mass, in 100% by mass of the composition for reducing reactive oxygen. **In** addition, when the composition for reducing reactive oxygen comprises the biosurfactant and a soybean meal degradation product, the soybean meal degradation product is comprised in an amount of preferably 0.004% by mass to 1.0% by mass, more preferably 0.004% by mass to 0.8% by mass, further preferably 0.005% by mass to 0.6% by mass, and particularly preferably 0.005% by mass to 0.5% by mass, in 100% by mass of the composition for reducing reactive oxygen. As another aspect, when the composition for reducing reactive oxygen comprises the biosurfactant and a soybean meal degradation product, preferably, the biosurfactant is comprised in an amount of 0.004% by mass to 0.2% by mass in 100% by mass of the composition for reducing reactive oxygen, and the soybean meal degradation product is comprised in an amount of 0.004% by mass to 0.2% by mass in 100% by mass of the composition for reducing reactive oxygen. More preferably, the biosurfactant is comprised in an amount of 0.005% by mass to 0.1% by mass in 100% by mass of the composition for reducing reactive oxygen, and the soybean meal degradation product is comprised in an amount of 0.005% by mass to 0.1% by mass in 100% by mass of the composition for reducing reactive oxygen. **In** addition, when the composition for reducing reactive oxygen comprises the biosurfactant and a soybean meal degradation product, the composition preferably does not substantially comprise a phospholipid. The above ranges are preferable because the generation of ROS can be suppressed within the ranges particularly appropriately.

A method for manufacturing the composition for reducing reactive oxygen is not particularly limited. For example, when the agriculturally acceptable carrier is a liquid carrier, examples of the method include a method of adding the biosurfactant and an additive used optionally, or the biosurfactant, a phospholipid, and an additive used optionally, or the biosurfactant, a soybean meal degradation product, and an additive used optionally, to the liquid carrier and stirring them until they become uniform.

The composition for reducing reactive oxygen is usually applied to plants and, for example, used for leaves, seeds, seedlings, fruits, and the like of plants. As one preferred aspect, the composition for reducing reactive oxygen is sprayed on the leaves of plants. Note that spraying on the leaves of plants means spraying at least on the leaves. The composition for reducing reactive oxygen may be sprayed on the stems and leaves, and a part thereof may be further sprayed on flowers, fruits, and the like.

### <Composition Precursor for Reducing Reactive Oxygen>

One embodiment of this disclosure is a composition precursor for reducing reactive oxygen, which becomes the composition for reducing reactive oxygen described above by dilution. The dilution is usually conducted with the above-described liquid carrier. The composition precursor for reducing reactive oxygen usually comprises at least one biosurfactant selected from peptide-based biosurfactants and sugar-based biosurfactants, and an agriculturally acceptable carrier and has a concentration of the biosurfactant higher than that for the composition for reducing reactive oxygen. When the composition precursor for reducing reactive oxygen is used to prepare a composition for reducing reactive oxygen, it is preferable because a uniform composition for reducing reactive oxygen can be easily prepared.

The composition precursor for reducing reactive oxygen comprises the biosurfactant preferably at a concentration 10 to 50000 times higher than that for the composition for reducing reactive oxygen. When the composition for reducing reactive oxygen comprises a phospholipid, the composition precursor for reducing reactive oxygen comprises the phospholipid preferably at a concentration 10 to 50,000 times higher than that for the composition for reducing reactive oxygen. **In** addition, when the composition for reducing reactive oxygen comprises a soybean meal degradation product, the composition precursor for reducing reactive oxygen comprises the soybean meal degradation product preferably at a concentration 10 to 50,000 times higher than that for the composition for reducing reactive oxygen. The amount of the biosurfactant comprised in the composition precursor for reducing reactive oxygen is preferably 50% by mass or less, more preferably 20% by mass or less, in 100% by mass of the composition precursor for reducing reactive oxygen. **In** addition, the amount of the agriculturally acceptable carrier (preferably a liquid carrier) comprised in the composition precursor for reducing reactive oxygen is preferably 20% by mass or more, more preferably 40% by mass or more, in 100% by mass of the composition precursor for reducing reactive oxygen.

### <Plant Cultivation Method>

One embodiment of this disclosure is a plant cultivation method in which the above-described composition for reducing reactive oxygen is applied to a plant. As the plant cultivation method, the above-described composition for reducing reactive oxygen is preferably sprayed on the leaves of the plant.

When the composition for reducing reactive oxygen is sprayed on the leaves of the plant, the composition is preferably sprayed in an amount that allows the amount of the biosurfactant in the composition for reducing reactive oxygen to be preferably 2.5 g to 200 g, more preferably 5 g to 100 g, per 10 ares of cultivation area of the plant. More specifically, when the composition for reducing reactive oxygen does not substantially comprise a phospholipid or a soybean meal degradation product, the composition for reducing reactive oxygen is preferably sprayed in an amount that allows the amount of the biosurfactant in the composition for reducing reactive oxygen to be preferably 20 g to 200 g, more preferably 20 g to 100 g, per 10 ares of cultivation area of the plant. When the composition for reducing reactive oxygen comprises the biosurfactant and a phospholipid but does not substantially comprise a soybean meal degradation product, the composition for reducing reactive oxygen is preferably sprayed in an amount that allows the amount of the biosurfactant in the composition for reducing reactive oxygen to be preferably 4 g to 200 g, more preferably 5 g to 100 g, and that allows the amount of the phospholipid therein to be preferably 2 g to 100 g, more preferably 2.5 g to 50 g, per 10 ares of cultivation area of the plant. **In** addition, when the composition for reducing reactive oxygen comprises the biosurfactant and a soybean meal degradation product but does not substantially comprise a phospholipid, the composition for reducing reactive oxygen is preferably sprayed in an amount that allows the amount of the biosurfactant in the composition for reducing reactive oxygen to be preferably 4 g to 200 g, more preferably 5 g to 100 g, and that allows the amount of the soybean meal degradation product therein to be preferably 4 g to 1000 g, more preferably 4 g to 800 g, further preferably 5 g to 600 g, and particularly preferably 5 g to 500 g, per 10 ares of cultivation area of the plant. As another aspect, the composition for reducing reactive oxygen is preferably sprayed in an amount that allows the amount of the soybean meal degradation product to be preferably 4 g to 200 g, more preferably 5 g to 100 g.

When the composition for reducing reactive oxygen is sprayed on the leaves of the plant, the timing of spraying is not particularly limited, and for example, it can be sprayed once or a plurality of times at any timing after germination and before the harvest of the plant.

### <Plant>

In this disclosure, while the plant is not particularly limited, it is preferably a crop plant. Examples of the crop plant include corn (corn, maize), wheat, barley, rye, oat, rice, soybean, canola (Brassica napus), cotton, sunflower, sugar beet, potato, tobacco, broccoli, lettuce, cabbage, spinach, Japanese mustard spinach, cauliflower, coconut, tomato, cucumber, eggplant, melon, pumpkin, okra, green pepper, watermelon, carrot, daikon, onion, green onion, fruit trees, flowers and ornamental plants, lawn grass, and pasture grass.

### [Examples]

While the following describes the embodiment with examples, this disclosure is not limited to these examples.

In the examples, the term "SF" means surfactin Na (product name: KANEKA Surfactin, manufactured by Kaneka Corporation). The term "RL" means a rhamnolipid (manufactured by AGAE Technologies). The term "SL" means a sophorolipid (one prepared in accordance with Journal of Oleo Science, 60, (5) pp. 267-273 (2011)). The term "lecithin" means soybean lecithin (manufactured by Nacalai Tesque Inc.). The term KVP means a soybean meal degradation product (peptide-based material produced by performing bacillus fermentation treatment on soybean meal in accordance with APPLIED AND ENVIRONMENTAL MICROBIOLOGY, Jan. 1994, pp. 243-247). The term "SILWET L-77" means a synthetic surfactant manufactured by Momentive Performance Materials Inc. The term "Tween 20" means a synthetic surfactant (manufactured by FUJIFILM Wako Pure Chemical Corporation). The term "Approach BI" means a spreading agent manufactured by MARUWA BIOCHEMICAL Co., Ltd., comprising a synthetic surfactant as a main component. The term "paraquat" means Paraquat Dichloride Standard (manufactured by FUJIFILM Wako Pure Chemical Corporation).

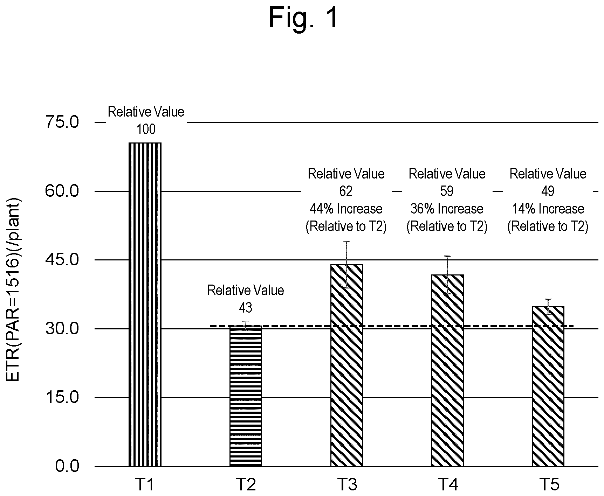

In Fig. 1 to Fig. 18 related to the examples, the relative value indicated above each bar chart in each drawing means a relative value when T1 in each drawing is 100. When an X% increase (relative to T2) is indicated above each bar chart in each drawing, it means that the value increases by X% relative to the value of T2 in each drawing. When a Y% decrease (relative to T2) is indicated above each bar chart in each drawing, it means that the value decreases by Y% relative to the value of T2 in each drawing.

### [Experimental Example 1]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for a Control (T1) (paraquat application).

Electron transfer rate (ETR) was measured by pulse amplitude modulated fluorometry (PAM fluorometry) twenty-four hours after the paraquat application. In addition, twenty-four hours after the paraquat application, a SPAD value was measured using a chlorophyll meter.

Table 1 below shows the composition for reducing reactive oxygen and the outline of operation for each treatment in Experimental Example.

### [Table 1]

**Table 1**

| Treatment | Number of Samples | Composition for Reducing Reactive Oxygen | | |
|---|---|---|---|---|
| T1 Control | 1 Plant | No Treatment | - | Measurement |
| T2 | 5 Plants | Water | Paraquat Application | Measurement |
| T3 | 5 Plants | Aqueous Solution with SF Diluted 1000 Times | Paraquat Application | Measurement |
| T4 | 5 Plants | Aqueous Solution with SF Diluted 2000 Times | Paraquat Application | Measurement |
| T5 | 5 Plants | Aqueous Solution with SF Diluted 5000 Times | Paraquat Application | Measurement |

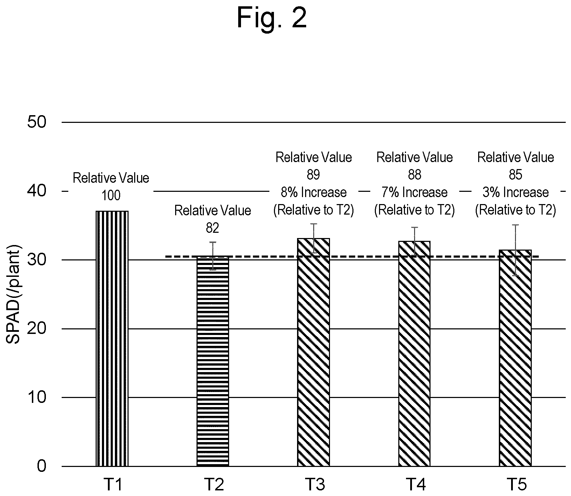

Fig. 1 shows the ETR when photosynthetically active radiation (PAR) is 1516. In addition, Fig. 2 shows the SPAD value. As is evident from Fig. 1, in T2, where water not functioning as the composition for reducing reactive oxygen was sprayed, the ETR significantly decreased by the paraquat application compared with T1. Since it is known that ROS is generated by paraquat application, the difference between T1 and T2 is considered to be due to the paraquat application. The ETR increased in T3 to T5, where the composition for reducing reactive oxygen was sprayed, compared with T2, suggesting that the ROS was reduced in T3 to T5 compared with T2. A similar result was also suggested from the SPAD value in Fig. 2.

### [Experimental Example 2]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments , foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 2 below shows the composition for reducing reactive oxygen and the outline of operation for each treatment in Experimental Example 2.

### [Table 2]

**Table 2**

| Treatment | Number of Samples | Composition for Reducing Reactive Oxygen | | |
|---|---|---|---|---|
| T1 Control | 2 Plants | No Treatment | - | Measurement |
| T2 | 5 Plants | Water | Paraquat Application | Measurement |
| T3 | 5 Plants | Aqueous Solution with SF Diluted 1000 Times | Paraquat Application | Measurement |
| T4 | 5 Plants | Aqueous Solution with RL Diluted 1000 Times | Paraquat Application | Measurement |
| T5 | 5 Plants | Aqueous Solution with SL Diluted 1000 Times | Paraquat Application | Measurement |

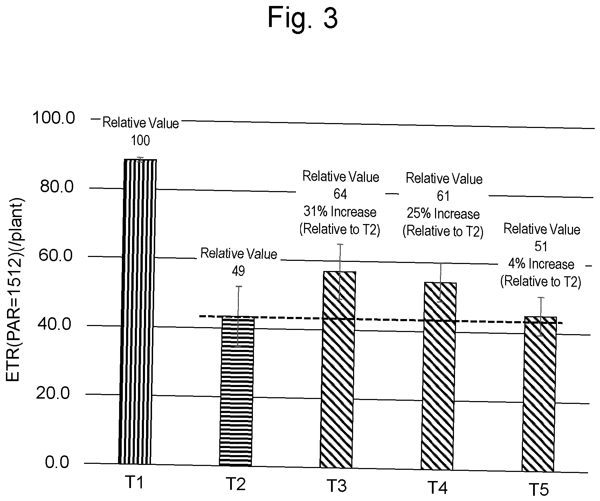

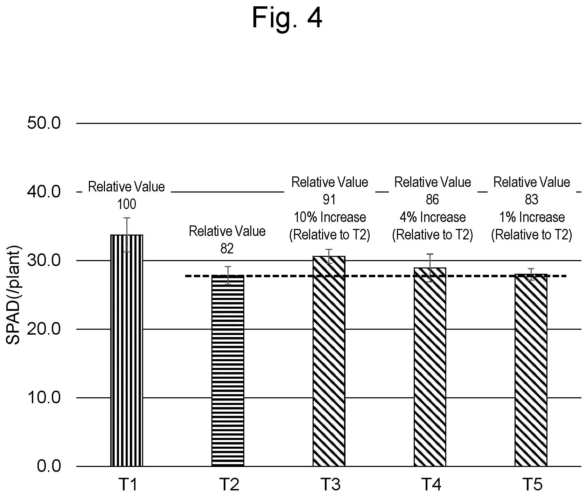

Fig. 3 shows the ETR when the PAR is 1512. In addition, Fig. 4 shows the SPAD value. As is evident from Fig. 3, the ETR significantly decreased in T2 compared with T1. The ETR increased in T3 to T5, where the composition for reducing reactive oxygen was sprayed, compared with T2, suggesting that the ROS was reduced in T3 to T5 compared with T2. A similar result was also suggested from the SPAD value in Fig. 4.

### [Experimental Example 3]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments , foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 3 below shows the composition for reducing reactive oxygen and the outline of operation for each treatment in Experimental Example 3.

### [Table 3]

**Table 3**

| Treatment | Number of Samples | Composition for Reducing Reactive Oxygen | | |
|---|---|---|---|---|
| T1 Control | 2 Plants | No Treatment | - | Measurement |
| T2 | 5 Plants | Water | Paraquat Application | Measurement |
| T3 | 5 Plants | Aqueous Solution with SF Diluted 10000 Times | Paraquat Application | Measurement |
| T4 | 5 Plants | Aqueous Solution with Lecithin Diluted 20000 Times | Paraquat Application | Measurement |
| T5 | 5 Plants | Aqueous Solution with SF Diluted 10000 Times and Lecithin Diluted 20000 Times | Paraquat Application | Measurement |

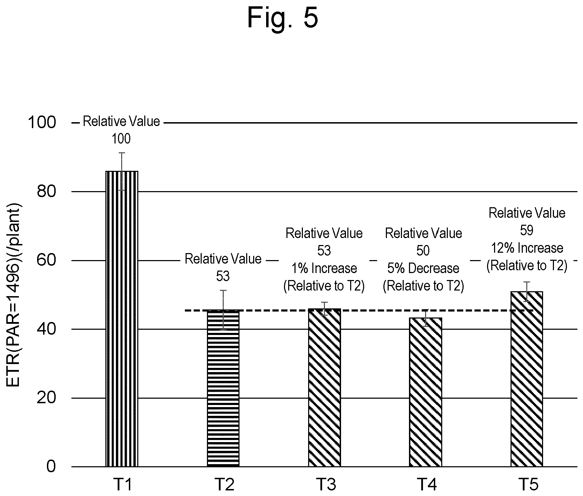

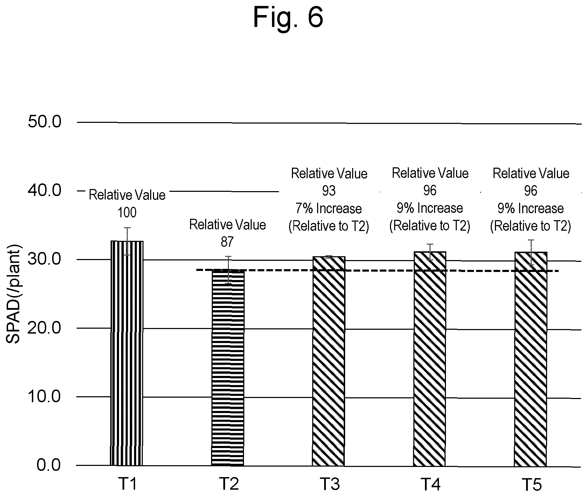

Fig. 5 shows the ETR when the PAR is 1496. In addition, Fig. 6 shows the SPAD value. As is evident from Fig. 5, the ETR significantly decreased in T2 compared with T1. The ETR slightly increased in T3, where the composition for reducing reactive oxygen with a low SF concentration was sprayed, compared with T2, and the ETR did not increase in T4, where no SF was included. However, the ETR significantly increased in T5, where the composition for reducing reactive oxygen comprising diluted SF and lecithin was sprayed, compared with T2, suggesting that the ROS was sufficiently reduced compared with T2.

### [Experimental Example 4]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 4 below shows the composition for reducing reactive oxygen and the outline of operation for each treatment in Experimental Example 4.

### [Table 4]

**Table 4**

| Treatment | Number of Samples | Composition for Reducing Reactive Oxygen | | |
|---|---|---|---|---|
| T1 Control | 2 Plants | No Treatment | - | Measurement |
| T2 | 5 Plants | Water | Paraquat Application | Measurement |
| T3 | 5 Plants | Aqueous Solution with SL Diluted 1000 Times | Paraquat Application | Measurement |
| T4 | 5 Plants | Aqueous Solution with Lecithin Diluted 2000 Times | Paraquat Application | Measurement |
| T5 | 5 Plants | Aqueous Solution with SL Diluted 1000 Times and Lecithin Diluted 2000 Times | Paraquat Application | Measurement |

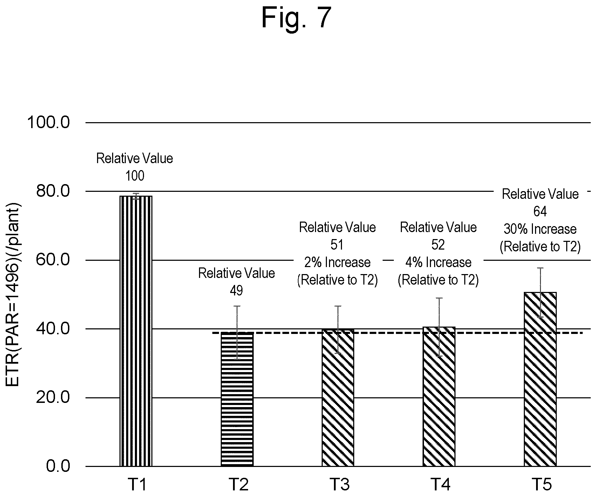

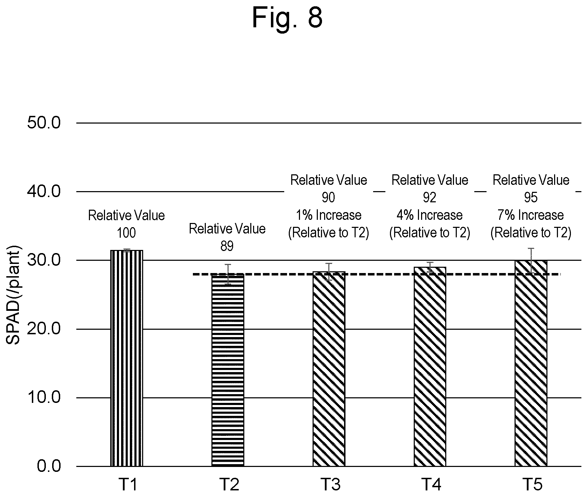

Fig. 7 shows the ETR when the PAR is 1496. In addition, Fig. 8 shows the SPAD value. As is evident from Fig. 7, the ETR significantly decreased in T2 compared with T1. The ETR slightly increased in T3, where the composition for reducing reactive oxygen comprising SL was sprayed, compared with T2. However, the ETR significantly increased in T5, where the composition for reducing reactive oxygen comprising SL and lecithin was sprayed, compared with T2, suggesting that the ROS was sufficiently reduced compared with T2. A similar result was also suggested from the SPAD value in Fig. 8.

### [Experimental Example 5]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 5 below shows the composition for reducing reactive oxygen and the outline of operation for each treatment in Experimental Example 5.

### [Table 5]

**Table 5**

| Treatment | Number of Samples | Composition for Reducing Reactive Oxygen | | |
|---|---|---|---|---|
| T1 Control | 2 Plants | No Treatment | - | Measurement |
| T2 | 5 Plants | Water | Paraquat Application | Measurement |
| T3 | 5 Plants | Aqueous Solution with SILWET L-77 Diluted 1000 Times | Paraquat Application | Measurement |
| T4 | 5 Plants | Aqueous Solution with Tween 20 Diluted 1000 Times | Paraquat Application | Measurement |
| T5 | 5 Plants | Aqueous Solution with Approach BI Diluted 1000 Times | Paraquat Application | Measurement |

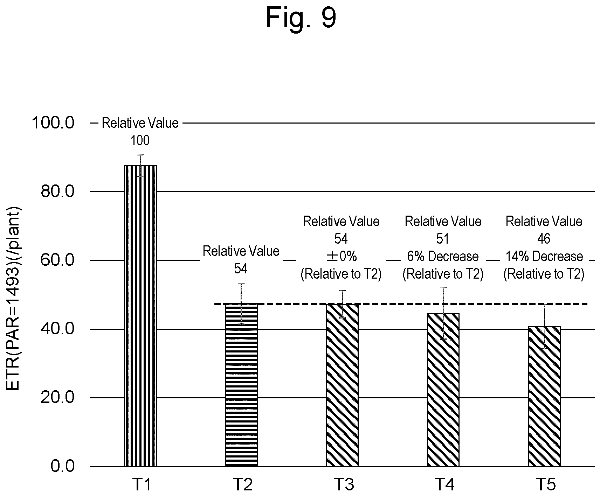

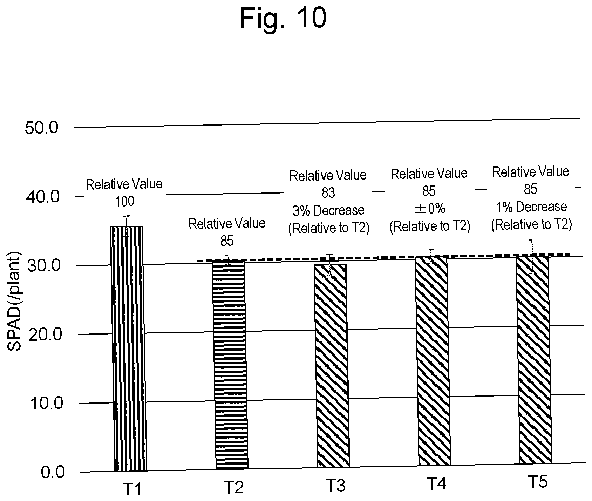

Fig. 9 shows the ETR when the PAR is 1493. In addition, Fig. 10 shows the SPAD value. As is evident from Fig. 9, the ETR significantly decreased in T2 compared with T1. In T3 to T5, where a composition not corresponding to the present invention was sprayed, an increase in the ETR was not observed compared with T2, suggesting that the ROS was not reduced compared with T2. A similar result was also suggested from the SPAD value in Fig. 10.

### [Experimental Example 6]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 6 below shows the composition for reducing reactive oxygen and the outline of operation for each treatment in Experimental Example 6.

### [Table 6]

**Table 6**

| Treatment | Number of Samples | Composition for Reducing Reactive Oxygen | | |
|---|---|---|---|---|
| T1 Control | 2 Plants | No Treatment | - | Measurement |
| T2 | 5 Plants | Water | Paraquat Application | Measurement |
| T3 | 5 Plants | Aqueous Solution with SF Diluted 10000 Times | Paraquat Application | Measurement |
| T4 | 5 Plants | Aqueous Solution with KVP Diluted 10000 Times | Paraquat Application | Measurement |
| T5 | 5 Plants | Aqueous Solution with SF Diluted 10000 Times and KVP Diluted 10000 Times | Paraquat Application | Measurement |

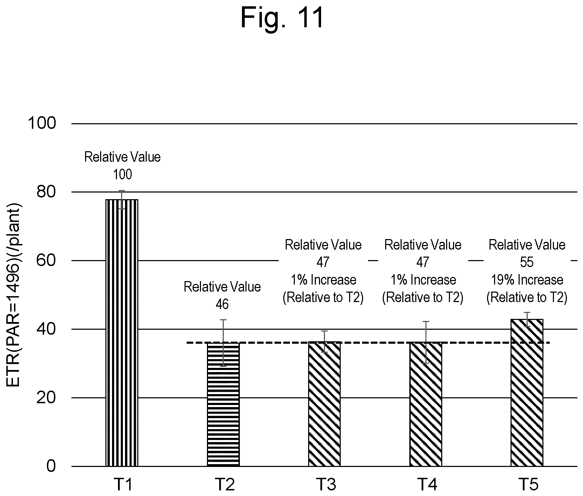

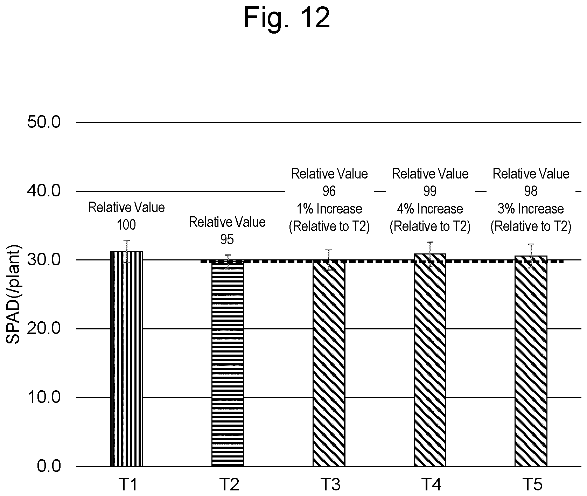

Fig. 11 shows the ETR when the PAR is 1496. In addition, Fig. 12 shows the SPAD value. As is evident from Fig. 11, the ETR significantly decreased in T2 compared with T1. The ETR slightly increased in T3 with a low SF concentration and T4 with a low KVP concentration, compared with T2, and the ETR significantly increased in T5, where the composition for reducing reactive oxygen comprising diluted SF and KVP was sprayed, compared with T2, suggesting that the ROS was sufficiently reduced compared with T2.

### [Experimental Example 7]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 7 below shows the composition for reducing reactive oxygen and the outline of operation for each treatment in Experimental Example 7.

### [Table 7]

**Table 7**

| Treatment | Number of Samples | Composition for Reducing Reactive Oxygen | | |
|---|---|---|---|---|
| T1 Control | 2 Plants | No Treatment | - | Measurement |
| T2 | 4 Plants | Water | Paraquat Application | Measurement |
| T3 | 4 Plants | Aqueous Solution with SF Diluted 1000 Times and Lecithin Diluted 2000 Times | Paraquat Application | Measurement |
| T4 | 4 Plants | Aqueous Solution with SF Diluted 1000 Times and Lecithin Diluted 40000 Times | Paraquat Application | Measurement |
| T5 | 4 Plants | Aqueous Solution with SF Diluted 20000 Times and Lecithin Diluted 2000 Times | Paraquat Application | Measurement |
| T6 | 4 Plants | Aqueous Solution with SF Diluted 20000 Times and Lecithin Diluted 40000 Times | Paraquat Application | Measurement |

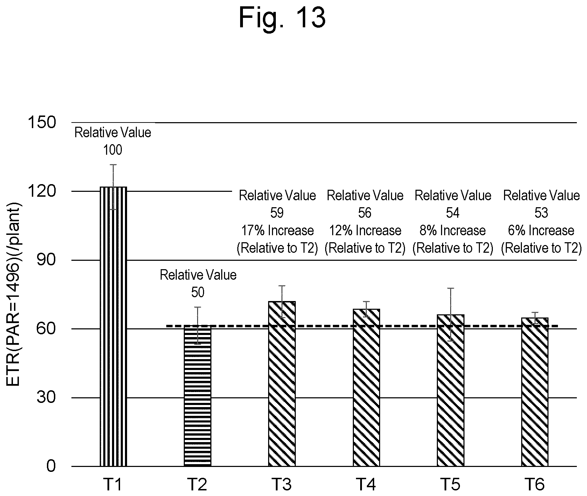

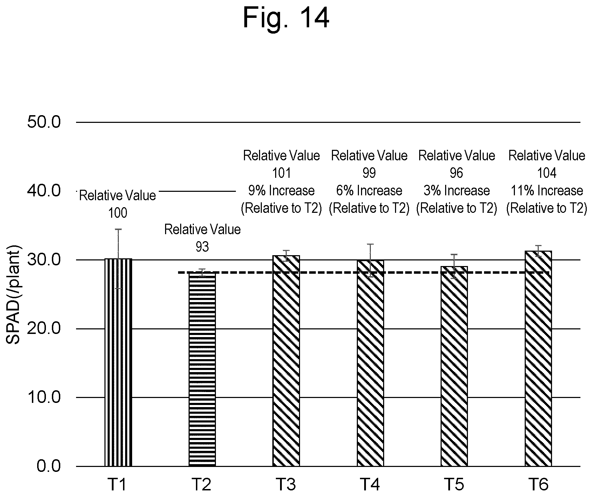

Fig. 13 shows the ETR when the PAR is 1496. In addition, Fig. 14 shows the SPAD value. As is evident from Fig. 13, the ETR significantly decreased in T2 compared with T1. In T3 to T6, where the composition for reducing reactive oxygen comprising SF and lecithin was sprayed, and T2, the ETR significantly increased in T3 to T6 compared with T2, suggesting that the ROS was sufficiently reduced compared with T2. A similar result was also suggested from the SPAD value in Fig. 14.

### [Experimental Example 8]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 8 below shows the composition for reducing reactive oxygen and the outline of operation for each treatment in Experimental Example 8.

### [Table 8]

**Table 8**

| Treatment | Number of Samples | Composition for Reducing Reactive Oxygen | | |
|---|---|---|---|---|
| T1 Control | 2 Plants | No Treatment | - | Measurement |
| T2 | 4 Plants | Water | Paraquat Application | Measurement |
| T3 | 4 Plants | Aqueous Solution with SF Diluted 1000 Times and KVP Diluted 1000 Times | Paraquat Application | Measurement |
| T4 | 4 Plants | Aqueous Solution with SF Diluted 1000 Times and KVP Diluted 20000 Times | Paraquat Application | Measurement |
| T5 | 4 Plants | Aqueous Solution with SF Diluted 20000 Times and KVP Diluted 1000 Times | Paraquat Application | Measurement |
| T6 | 4 Plants | Aqueous Solution with SF Diluted 20000 Times and KVP Diluted 20000 Times | Paraquat Application | Measurement |

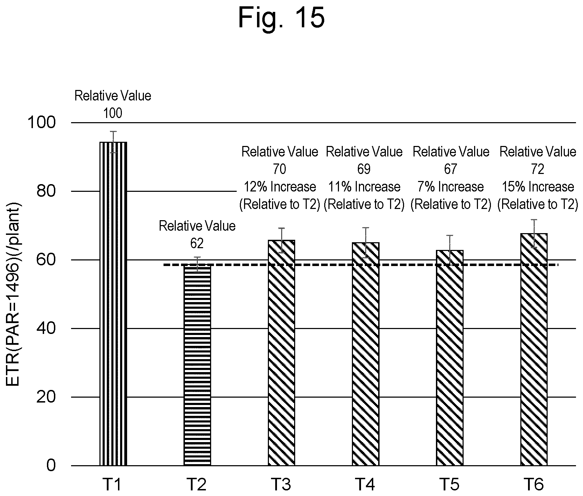

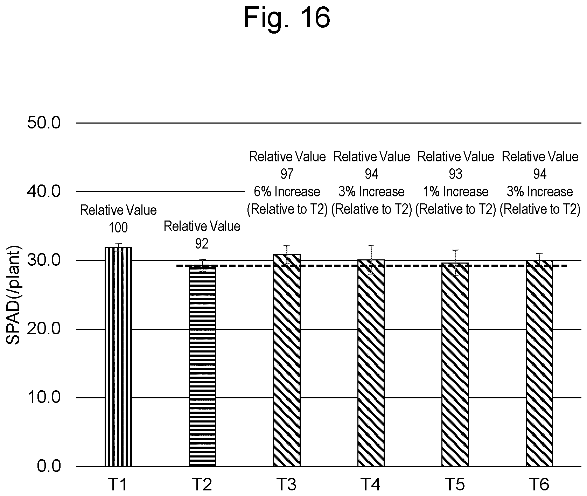

Fig. 15 shows the ETR when the PAR is 1496. In addition, Fig. 16 shows the SPAD value. As is evident from Fig. 15, the ETR significantly decreased in T2 compared with T1. In T3 to T6, where the composition for reducing reactive oxygen comprising SF and KVP was sprayed, and T2, the ETR significantly increased in T3 to T6 compared with T2, suggesting that the ROS was sufficiently reduced compared with T2. A similar result was also suggested from the SPAD value in Fig. 16.

### [Experimental Example 9]

A 9 cm poly pot was filled with culture soil and seeded with three soybeans (Fukuyutaka).

After seeding, the soybeans were cultivated in an incubator set in a light period (6:00-18:00, temperature 26°C, illuminance 120 µmol/m²·s) and a dark period (18:00-6:00, temperature 18°C). After germination, they were thinned to one plant.

After the first true leaf development, in each of the following treatments, foliar spraying of the following liquid (composition for reducing reactive oxygen) was conducted on each plant (application of the composition for reducing reactive oxygen). Twenty-four hours after the foliar spraying, foliar spraying of a paraquat aqueous solution with SILWET L-77 added to make a 1,000-fold dilution was conducted on each plant, except for the Control (T1) (paraquat application).

ETR was measured by the PAM fluorometry twenty-four hours after the paraquat application. In addition, twenty-four hours after the paraquat application, a SPAD value was measured using a chlorophyll meter.

Table 9 below shows that the composition for reducing reactive oxygen and the outline of operation for each treatment in Experimental Example 9.

### [Table 9]

**Table 9**

| Treatment | Number of Samples | Composition for Reducing Reactive Oxygen | | |
|---|---|---|---|---|
| T1 Control | 2 Plants | No Treatment | - | Measurement |
| T2 | 4 Plants | Water | Paraquat Application | Measurement |
| T3 | 4 Plants | Aqueous Solution with SF Diluted 2000 Times | Paraquat Application | Measurement |
| T4 | 4 Plants | Aqueous Solution with KVP Diluted 200 Times | Paraquat Application | Measurement |
| T5 | 4 Plants | Aqueous Solution with SF Diluted 2000 Times and KVP Diluted 200 Times | Paraquat Application | Measurement |

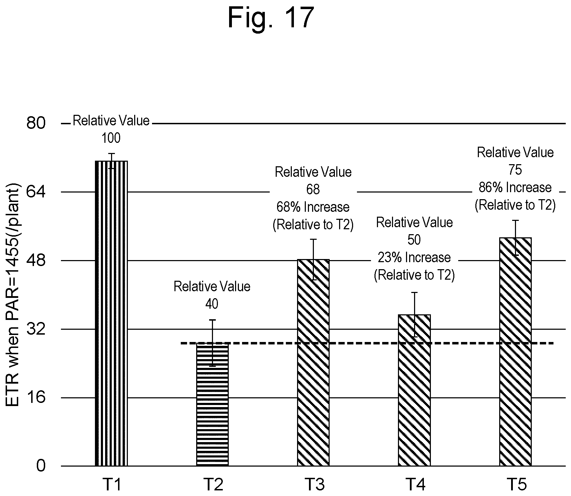

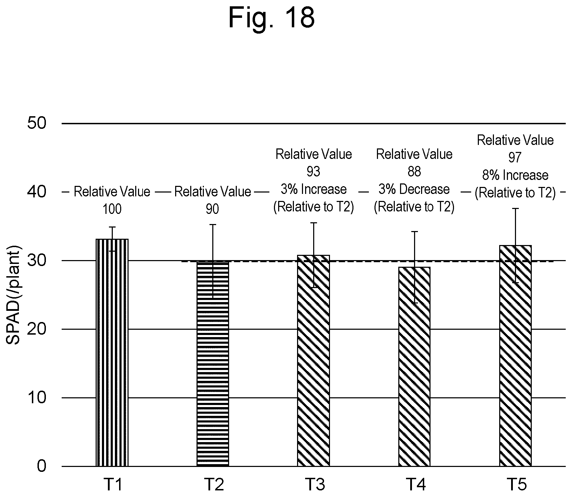

Fig. 17 shows the ETR when the PAR is 1455. In addition, Fig. 18 shows the SPAD value. As is evident from Fig. 17, the ETR significantly decreased in T2 compared with T1. In T3, where the composition for reducing reactive oxygen comprising SF was sprayed, and T2, the ETR significantly increased in T3 compared with T2, suggesting that the ROS was sufficiently reduced compared with T2. In T5, where the composition for reducing reactive oxygen comprising SF and KVP was sprayed, and T2, the ETR significantly increased in T5 compared with T2, suggesting that the ROS was sufficiently reduced compared with T2. In addition, an increase in the ETR was observed in T5, even compared with T3 and T4. A similar result was also suggested from the SPAD value in Fig. 18.

Upper limit values and/or lower limit values of respective numerical ranges described in this description can be appropriately combined to specify a preferred range. For example, an upper limit value and a lower limit value of numerical ranges can be appropriately combined to specify a preferred range, upper limit values of numerical ranges can be appropriately combined to specify a preferred range, and lower limit values of numerical ranges can be appropriately combined to specify a preferred range. In addition, in this application, a numerical range expressed using the term "to" includes respective values described before and after the term "to" as the lower limit value and the upper limit value.

It should be understood that throughout the entire description, the expression as a singular form also includes a concept of its plural form unless otherwise stated. Accordingly, articles of a singular form (for example, in the case of English, "a," "an," and "the") should be understood as including the concept of its plural form unless otherwise stated.

While the embodiment has been described in detail, the specific configuration is not limited to the embodiments. Design changes within a scope not departing from the gist of this disclosure are included in this disclosure.

All the publications, patents, and patent applications cited in the description are directly incorporated herein as references.

## Claims

1. A composition for reducing reactive oxygen comprising
at least one biosurfactant selected from peptide-based biosurfactants and sugar-based biosurfactants, and an agriculturally acceptable carrier.

2. The composition for reducing reactive oxygen according to claim 1,
wherein the biosurfactant is comprised in an amount of 0.004% by mass to 0.2% by mass in 100% by mass of the composition for reducing reactive oxygen.

3. The composition for reducing reactive oxygen according to claim 1, further comprising a phospholipid.

4. The composition for reducing reactive oxygen according to claim 3,
wherein the biosurfactant is comprised in an amount of 0.004% by mass to 0.2% by mass in 100% by mass of the composition for reducing reactive oxygen, and
wherein the phospholipid is comprised in an amount of 0.002% by mass to 0.1% by mass in 100% by mass of the composition for reducing reactive oxygen.

5. The composition for reducing reactive oxygen according to claim 1, further comprising a soybean meal degradation product.

6. The composition for reducing reactive oxygen according to claim 5,
wherein the biosurfactant is comprised in an amount of 0.004% by mass to 0.2% by mass in 100% by mass of the composition for reducing reactive oxygen, and
wherein the soybean meal degradation product is comprised in an amount of 0.004% by mass to 1.0% by mass in 100% by mass of the composition for reducing reactive oxygen.

7. The composition for reducing reactive oxygen according to claim 1,
wherein the biosurfactant is at least one biosurfactant selected from surfactin, rhamnolipids, sophorolipids, and their salts.

8. The composition for reducing reactive oxygen according to claim 1 for spraying on a plant leaf.

9. A composition precursor for reducing reactive oxygen to be the composition for reducing reactive oxygen according to any one of claims 1 to 8 by dilution.
